# EUROPÄISCHE PATENTSCHRIFT

(11) **EP 3 526 466 B1**
(45) Veröffentlichungstag und Bekanntmachung des Hinweises auf die Patenterteilung: **05.01.2022**
(21) Anmeldenummer: 17757748.3
(22) Anmeldetag: 23.08.2017
(51) Int. Cl.: F03B 1/02, F03B 7/00

(54) **WALZENFÖRMIGES LAUFRAD EINER DURCHSTRÖMTURBINE**
ROLLER-SHAPED RUNNER OF A CROSS-FLOW TURBINE
ROUE À AUGETS CYLINDRIQUE D'UNE TURBINE À IMPULSIONS RADIALES

(30) Priorität: 12.10.2016 DE 202016105711 U
(43) Veröffentlichungstag der Anmeldung: 21.08.2019
(73) Patentinhaber: OSSBERGER GmbH + Co KG, 91781 Weißenburg (DE)
(72) Erfinder: WIRTH, Dieter, 91781 Weissenburg (DE); OSSBERGER, Karl-Friedrich, 91781 Weissenburg (DE)
(74) Vertreter: Heyer, Volker
(86) Internationale Anmeldenummer: PCT/EP2017/071225
(87) Internationale Veröffentlichungsnummer: WO 2018/068936

(56) Entgegenhaltungen:
- EP-A1- 0 133 306
- EP-A1- 1 238 143
- JP-U- H0 354 288

## Beschreibung

### 1. Gebiet der Erfindung

Die vorliegende Erfindung betrifft ein walzenförmiges Laufrad einer Durchströmturbine, welches radial von außen nach innen und dann radial von innen nach außen durchströmbar ist. Des Weiteren betrifft vorliegende Erfindung eine Durchströmturbine mit diesem walzenförmigen Laufrad sowie eine Papierherstellungsvorrichtung in Kombination mit der oben genannten Durchströmturbine zur Energierückgewinnung.

### 2. Hintergrund der Erfindung

Im Stand der Technik sind Durchströmturbinen und ihre Konstruktion seit längerem bekannt. Derartige Durchströmturbinen werden auch als Querstromturbine, als Banki-Turbine, als Michell-Turbine oder als Ossberger-Turbine bezeichnet. Im Gegensatz zu den anderen bekannten Turbinenarten, wie die Francis-Turbine, die Kaplan-Turbine oder die Pelton-Turbine, wird ein walzenförmiges Laufrad der Durchströmturbine zuerst von außen nach innen durchströmt. Nachdem das Triebwasser des walzenförmigen Laufrads das Laufradinnere durchquert hat, tritt es wieder von innen nach außen aus dem walzenförmigen Laufrad aus. Auf diese Weise wird das walzenförmige Laufrad mithilfe des Triebwassers gedreht und gereinigt. Im Gegensatz dazu werden Laufräder anderer Turbinenarten in radialer Richtung oder in axialer Richtung angeströmt, aber nicht von dem Triebwasser durchströmt.

Ein bekanntes walzenförmiges Laufrad einer Durchströmturbine ist beispielsweise in EP 0 132 801 B1 und EP 0 133 306 B1 beschrieben. Das Laufrad der EP 0 133 306 B1 umfasst eine Welle, auf der zwei endseitig angeordnete Stirnscheiben und mindestens eine axial dazwischen liegende Verbindungsscheibe angeordnet sind. Die Stirnscheiben und die mindestens eine Verbindungsscheibe befinden sich in radialen Ebenen der Welle. Die Stirnscheiben und die Verbindungsscheiben weisen radial außen entsprechend einem Schaufelprofil geformte Schlitze zur Aufnahme der Schaufeln auf. Die profilierten Schaufeln des walzenförmigen Laufrads sind in diesen Schlitzen befestigt, sodass sie einen Kranz profilierter Schaufeln im Laufrad bilden.

In der Vergangenheit wurden Laufräder eingesetzt, deren Durchmesser D und Länge L ein Durchmesser: Längen-Verhältnis von > 1:4 erfüllten. Die Erfahrungen mit dieser Laufradkonstruktion haben aber gezeigt, dass die Dimensionen nicht unbegrenzt an neue Anwendungsanforderungen anpassbar sind. Beispielsweise hat sich die Durchbiegung des Laufrads in axialer Richtung als kritisch erwiesen, wenn die Länge des walzenförmigen Laufrads erhöht werden sollte. Somit führte beispielsweise eine Vergrößerung der Länge bekannter Laufräder zu einer Reduktion der Lebensdauer des walzenförmigen Laufrads, da die Verbindung aus Welle und Schaufelkranz im Laufrad nicht den mechanischen Belastungen über eine wünschenswerte Lebensdauer standhielt.

Derartige Durchströmturbinen werden beispielsweise in Wasserkraftwerken zur Umwandlung der kinetischen Energie des Wassers in elektrische Energie genutzt. Als ein weiteres Einsatzgebiet beschreibt EP 1 238 143 B1 den Einsatz von Durchströmturbinen zur Energierückgewinnung bei der Papierherstellung. Bei der Herstellung von Papier- und Kartonbahnen werden nämlich in den entsprechenden Vorrichtungen größere Mengen Wasser bewegt, dessen kinetische Energie mithilfe einer Durchströmturbine nutzbar ist.

Bezugnehmend auf die oben beschriebenen Nachteile ist es eine Aufgabe vorliegender Erfindung, eine verbesserte Konstruktion eines walzenförmigen Laufrads bereitzustellen, welches verbesserte Geometrieanforderungen und somit verbesserte Anpassungsmöglichkeiten an neue Einsatzgebiete bereitstellt.

### 3. Zusammenfassung der Erfindung

Die obige Aufgabe wird durch ein walzenförmiges Laufrad gemäß dem unabhängigen Patentanspruch 1, durch eine Durchströmturbine mit diesem walzenförmigen Laufrad gemäß dem abhängigen Patentanspruch 5 gelöst. Des Weiteren offenbart vorliegende Erfindung eine Papierherstellungsvorrichtung in Kombination mit einem System zur Energierückgewinnung, das die erfindungsgemäße Durchströmturbine verwendet, wie sie im abhängigen Patentanspruch 6 definiert ist. Weiterhin offenbart vorliegende Erfindung ein Verfahren zur Herstellung eines walzenförmigen Laufrads einer Durchströmturbine gemäß dem unabhängigen Patentanspruch 7. Vorteilhafte Ausgestaltungen und Weiterentwicklungen vorliegender Erfindung gehen aus der folgenden Beschreibung, den begleitenden Zeichnungen und den anhängenden Ansprüchen hervor.

Die vorliegende Erfindung offenbart ein walzenförmiges Laufrad einer Durchströmturbine, welches radial von außen nach innen und dann radial von innen nach außen durchströmbar ist. Das walzenförmige Laufrad weist die folgenden Merkmale auf: eine Welle mit zwei endseitig auf der Welle angeordneten Endscheiben und einer Mehrzahl zwischen den Endscheiben auf der Welle fest angeordneten Zwischenscheiben, wobei die Endscheiben und die Zwischenscheiben radiale Ebenen in Bezug auf die Welle definieren, die End- und Zwischenscheiben weisen jeweils eine Mehrzahl von radial außen angeordneten Schlitzen auf, in denen eine parallel zur Welle verlaufende profilierte Schaufel in jeweils einem Schlitz von mindestens zwei Endscheiben und mehrerer Zwischenscheiben befestigt ist, sodass die Welle in einem radialen Abstand von einem Kranz profilierter Schaufeln umgeben ist, wobei das walzenförmige Laufrad einen Außendurchmesser D und eine Länge L aufweist, für die 0,08≤D/L≤0,25 gilt.

Basierend auf der erfindungsgemäßen Konstruktion des walzenförmigen Laufrads wurde beispielsweise mit einem durchaus üblichen Durchmesser von 600 Millimetern des Laufrads eine bisher nicht betriebsfähig bereitstellbare Länge eines walzenförmigen Laufrads realisiert. So sind bevorzugt Laufräder der Durchströmturbine mit einer Länge von ca. 6 Metern bei einem Durchmesser von 600 Millimetern realisierbar. Zu diesem Zweck wurde das Laufrad aufgrund seiner zusammenwirkenden Strukturelemente, wie die parallel zur Welle verlaufenden Schaufeln und die tragenden End- und Zwischenscheiben, derart konfiguriert, dass ein dauerhafter und versagensfreier Betrieb gewährleistet ist. In diesem Zusammenhang ist es bevorzugt, den Außendurchmesser D und die Länge L des walzenförmigen Laufrads derart zu konfigurieren, dass sie das Verhältnis 0,09 ≤ D/L ≤ 0,2, vorzugsweise 0,095 ≤ D/L ≤ 0,15, erfüllen.

Um die bevorzugten Geometrieverhältnisse des walzenförmigen Laufrads zu realisieren ist es bevorzugt, dass die End- und Zwischenscheiben mit den profilierten Schaufeln durch Schweißen verbunden sind. Gemäß einer erfindungsgemäßen ersten Alternative weisen die profilierten Schaufeln einen sichelförmigen Schaufelquerschnitt in radialer Richtung des Laufrads auf, der durch eine Schaufelinnenseite und eine Schaufelaußenseite definiert ist. Der Schaufelquerschnitt hat bevorzugt eine maximale Dicke dₛ der profilierten Schaufel im Bereich von 6 mm ≤ dₛ ≤ 18 mm, vorzugsweise 9 mm ≤ dₛ ≤ 14 mm.

Wie oben bereits erwähnt worden ist, umgeben die in den Zwischenscheiben befestigten Schaufeln die Welle in Form eines Kranzes, der radial von der Welle beabstandet ist. Diese bekannte Konfiguration gewährleistet, dass das Triebwasser des Laufrads das Laufrad zuerst von radial außen nach innen durchströmt, um nach Durchqueren des Laufradinneren gegenüberliegend radial wieder von innen nach außen auszutreten. Mithilfe der bevorzugten Dickensteigerung der profilierten Schaufel wurde das gesamte Schaufelprofil über die Länge der Welle versteift. Dies führt gleichzeitig dazu, dass auch die gesamte Konstruktion des Laufrads steifer ausgebildet ist, sodass dadurch bevorzugt eine Steigerung der Torsionssteifigkeit des Laufrads erzielt wird. Zudem trägt die gesteigerte Dicke der einzelnen Schaufel zu einer verminderten Durchbiegung des walzenförmigen Laufrads bei, wodurch ein gesicherter Betrieb des Laufrads gerade bei größeren Längen, vorzugsweise mit einer Länge von 6 Metern, ermöglicht wird.

Weiterhin bevorzugt wird der Schaufelquerschnitt durch mindestens einen Innenradius R_{I} und mindestens einen Außenradius R_{A} definiert, wobei gleichzeitig der Schaufelquerschnitt eine maximale Sekantenbreite Bs im Bereich von 60 mm ≤ Bₛ ≤ 140 mm aufweist. Da sich der Schaufelquerschnitt aus einer Mehrzahl von Kreisbögen zusammensetzt, lässt sich der Begriff Sekantenbreite folgendermaßen erläutern. Eine Sekante bezeichnet für gewöhnlich den geradlinigen Abstand zwischen zwei auf einem Kreisumfang angeordneten Punkten. Die maximale Sekantenbreite bezeichnet die Entfernung zwischen zwei maximal voneinander entfernten Punkten, die auf dem kreisbogenförmig ausgebildeten Rand des Schaufelquerschnitts angeordnet sind.

Gemäß einer zweiten Alternative der vorliegenden Erfindung ist die profilierte Schaufel in den Schlitzen der zwei Endscheiben und mehreren Zwischenscheiben über eine Schweißverbindung zwischen Schaufel und End- und Zwischenscheibe befestigt. Zu diesem Zweck ist bevorzugt eine Schweißnaht an einer konkaven Schaufelinnenseite vorgesehen, die in einem Bereich von 5 mm - 20 mm vor einem geschlossenen Ende des Schlitzes der Zwischenscheibe endet. Ergänzend dazu oder alternativ dazu ist eine Schweißnaht an einer konvexen Schaufelaußenseite vorgesehen, die sich über ein Teilstück von 10 % - 60 % einer Gesamtlänge der konvexen Schaufelaußenseite erstreckt. Diese gezielte Verbindung zwischen Schaufel und Zwischenscheibe trägt ebenfalls bevorzugt dazu bei, dass die mechanischen Belastungen innerhalb des walzenförmigen Laufrads reduziert werden. Da der Eckbereich des Schlitzes in der Zwischenscheibe zu einer Konzentration mechanischer Spannungen beiträgt, wird die Schweißnaht zwischen der Begrenzung des Schlitzes und der konkaven Schaufelinnenseite nicht bis in den Endbereich des Schlitzes und somit in den Bereich der mechanischen Spannungskonzentration geführt. Dies ermöglicht eine gewisse Beweglichkeit der Schlitzränder und der angrenzenden konkaven Schaufelinnenseite, die zu einem Abbau der mechanischen Spannungen beitragen. Des Weiteren bevorzugt wird die konvexe Schaufelaußenseite gerade nicht über ihre Gesamtlänge mit der angrenzenden Wand des Schlitzes der Zwischenscheibe verschweißt. Auch diese Verbindung ermöglicht im Rahmen der Materialeigenschaften von Schaufel und Zwischenscheibe eine größere Ausgleichsmöglichkeit bzw. Relaxationsmöglichkeit für mechanische Spannungen im Vergleich zu einer Schweißverbindung über die Gesamtlänge der Grenzfläche zwischen konvexer Schaufelaußenseite und der angrenzenden Schlitzwand.

Vorliegende Erfindung offenbart zudem eine Durchströmturbine mit einem walzenförmigen Laufrad gemäß der oben beschriebenen bevorzugten Ausführungsformen.

Des Weiteren umfasst vorliegende Erfindung eine Papierherstellungsvorrichtung in Kombination mit einem System zur Energierückgewinnung, die eine Durchströmturbine in Kombination mit einer der bevorzugten Ausführungsformen des oben beschriebenen walzenförmigen Laufrads.

Vorliegende Erfindung offenbart zudem ein Verfahren zur Herstellung eines walzenförmigen Laufrads einer Durchströmturbine, wobei das walzenförmige Laufrad ein Laufrad gemäß einer der vorhergehend beschriebenen Ausführungsformen ist und das Verfahren die folgenden Schritte aufweist: Bereitstellen einer Welle mit zwei darauf endseitig fest angeordneten Endscheiben und einer Mehrzahl fest auf der Welle angeordneter Zwischenscheiben zwischen den Endscheiben, Anordnen und Befestigen mehrerer parallel zur Welle verlaufender profilierter Schaufeln in jeweils einem Schlitz mehrerer Zwischenscheiben, sodass das Laufrad einen Außendurchmesser D und eine Länge L gemäß 0,08 ≤ D/L ≤ 0,2 besitzt. Gemäß einer bevorzugten Ausgestaltung des oben genannten Verfahrens wird die Schaufel mittels Schweißen in den Schlitzen der Zwischenscheiben befestigt, wobei eine Schweißnaht an einer konkaven Schaufelinnenseite in einem

Bereich von 5 mm - 20 mm vor einem geschlossenen Ende des Schlitzes endet. Die konstruktiven Vorteile dieses Vorgehens wurden bereits oben in Verbindung mit der konstruktiven Ausgestaltung des walzenförmigen Laufrads beschrieben. Gemäß einer weiteren bevorzugten Ausführungsform des Verfahrens erstreckt sich eine Schweißnaht an einer konvexen Schaufelaußenseite nur über ein Teilstück der Schaufelaußenseite aus dem Bereich von 10 % - 60 % einer Gesamtlänge der konvexen Schaufelaußenseite bezogen auf einen Schaufelquerschnitt.

Gemäß einer weiteren bevorzugten Ausführungsform vorliegender Erfindung weist das Verfahren folgenden weiteren Schritt auf: Bereitstellen, vorzugsweise Kaltwalzen der profilierten Schaufel mit einem sichelförmigen Schaufelquerschnitt, der durch eine Schaufelinnenseite und eine Schaufelaußenseite definiert ist, wobei der Schaufelquerschnitt eine maximale Dicke ds der profilierten Schaufel im Bereich von 6 mm ≤ dₛ ≤ 18 mm, vorzugsweise 9 mm ≤ dₛ ≤ 14 mm, aufweist.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine Explosionsdarstellung einer bevorzugten Ausführungsform einer Durchströmturbine,

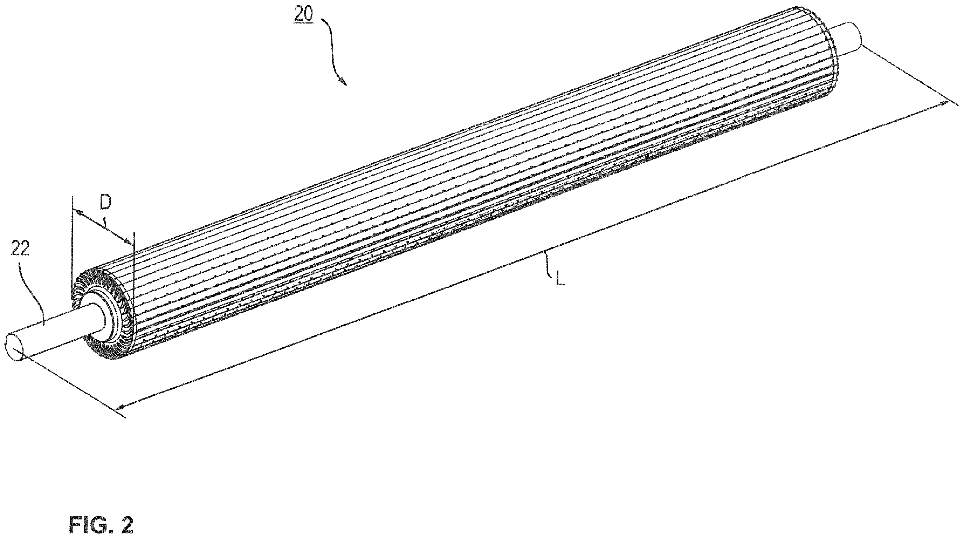

- Figur 2: eine perspektivische Darstellung einer bevorzugten Ausführungsform eines walzenförmiges Laufrads der Durchströmturbine,

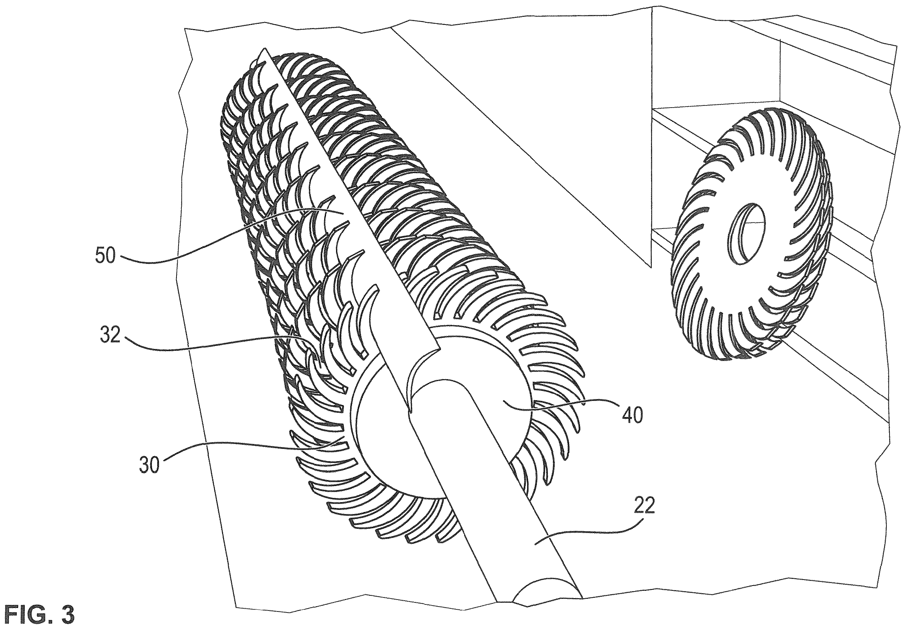

- Figur 3: eine perspektivische Darstellung einer bevorzugten Ausführungsform des walzenförmigen Laufrads während seines Zusammenbaus,
- Figur 4: eine bevorzugte Ausführungsform eines Schaufelquerschnitts einer Schaufel des walzenförmigen Laufrads,
- Figur 5: eine weitere bevorzugte Ausführungsform eines Schaufelquerschnitts einer Schaufel des walzenförmigen Laufrads,
- Figur 6: eine schematische Darstellung einer bevorzugten Ausführungsform der Anordnung der Schaufel in den Schlitzen der Zwischenscheiben und den Schlitzen der Endscheiben,

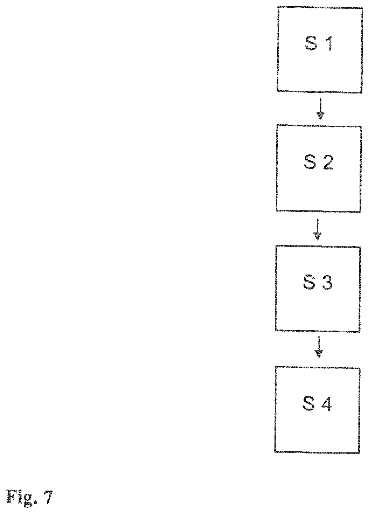

- Figur 7: ein Flussdiagramm einer bevorzugten Ausführungsform eines Herstellungsverfahrens des walzenförmigen Laufrads.

### 5. Detaillierte Beschreibung der bevorzugten Ausführungsformen

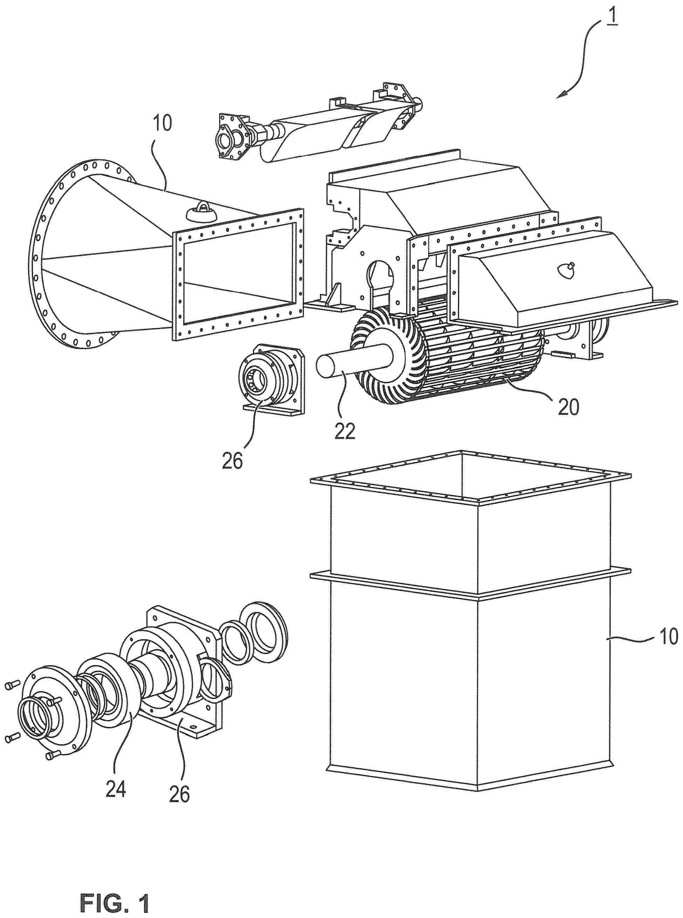

Einen schematischen Aufbau einer Durchströmturbine 1 zeigt Fig. 1. Wie man anhand der Explosionsdarstellung erkennen kann, wird ein Wasserstrahl (nicht gezeigt) über einen mehrteiligen Leitapparat 10 zu einem walzenförmigen Laufrad 20 geführt. Das walzenförmige Laufrad 20 wird vom Wasserstrahl durchquert, indem dieser zunächst radial von außen nach innen und dann radial von innen nach außen das kranzartige Laufrad 20 durchströmt. Dabei versetzt der Wasserstrahl das Laufrad 20 in Drehung, die auf einen Generator (nicht gezeigt) zur Erzeugung elektrischer Energie übertragen wird. Entsprechend wird die Durchströmturbine 1 zur Umwandlung kinetischer Energie eines strömenden Mediums, wie beispielsweise Wasser, in elektrische Energie eingesetzt. Dies ist bei Flüssen oder aufgestauten Wassermengen in gleicher Weise bevorzugt wie bei der Herstellung von Papier und Karton. Des Weiteren ist die Durchströmturbine 1 bevorzugt in größeren Mengen strömenden Kühlmittels einsetzbar.

In diesem Zusammenhang nutzt die Durchströmturbine 1 einen Wasserstrahl oder -strom aus Fallhöhen von 2,5 m bis 200 m. Dabei werden bevorzugt Wasserströme im Bereich von 40 1/s bis 13000 1/s zur Stromerzeugung genutzt.

Um eine Drehbewegung des walzenförmigen Laufrads 20 zu gewährleisten, ist eine Welle 22 des Laufrads 20 in Pendelrollenlagern 24 gelagert. Die Pendelrollenlager 24 sind vorzugsweise an den Enden der Welle 22 in separaten Lagergehäusen 26 untergebracht.

Bekannte walzenförmige Laufräder von Durchströmturbinen 1 haben die in der folgenden Tabelle aufgelisteten Geometrieparameter:

| **Durchmesser** | **Maximale Länge** | **Schaufelzahl** |
|---|---|---|
| 300 mm | 990 mm | 30 |
| 400 mm | 1500 mm | 30 |
| 500 mm | 1800 mm | 30 |
| 600 mm | 2250 mm | 30 |
| 800 mm | 3000 mm | 31 |
| 1000 mm | 3300 mm | 37 |
| 1250 mm | 3450 mm | 37 |

Die maximale Länge L des Laufrads 20 wird aus dem Abstand der einander gegenüberliegenden Endscheiben der Welle 22 bestimmt.

Das Laufrad 20 weist auf der Welle 22 eine Mehrzahl befestigter Zwischenscheiben 30 auf. Diese Anordnung der Zwischenscheiben 30 ist jeweils an ihren Enden durch eine Endscheibe 40 begrenzt. Die Endscheiben 40 und die Zwischenscheiben 30 werden auf der Welle 22 mittels Schweißen befestigt.

Die Zwischenscheiben 30 und die Endscheiben 40 weisen in einem radialen Außenbereich eine Mehrzahl von bogenförmig ausgebildeten Schlitzen 32 auf. Die Schlitze 32 sind in Umfangsrichtung und gleichmäßig beabstandet zueinander angeordnet. Sie dienen der Aufnahme und Befestigung der Mehrzahl von Schaufeln 50, die die Welle 22 im Laufrad 20 kranzartig umgeben.

Die Schaufeln 50 erstrecken sich über die Länge des Laufrads L ausgenommen der Enden der Welle 22 zur drehbaren Lagerung. Die Schaufeln 50 sind jeweils in einem Schlitz 32 der auf der Welle 22 befestigen End- und Zwischenscheiben 30 angeordnet. Dadurch entsteht der Kranz profilierter Schaufeln 50, der die Welle 22 in einem bestimmten radialem Abstand umgibt.

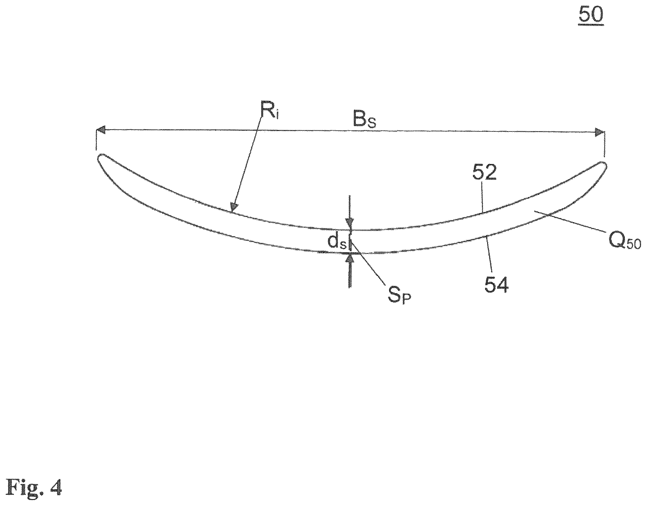

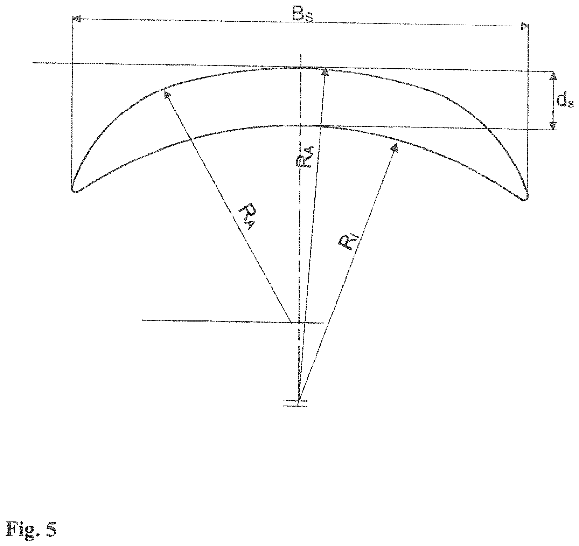

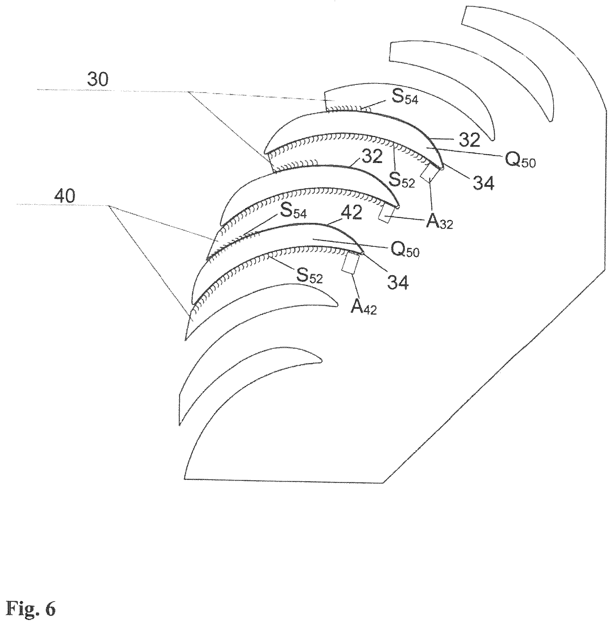

Fig. 6 zeigt bevorzugte Schlitze 32 und 42, wobei bevorzugt die Schlitze 32 in einer Zwischenscheibe 30 und die Schlitze 42 in einer Endscheibe 40 vorgesehen sind. Wie man erkennen kann, sind die profilierten Schaufeln 50, hier schraffiert dargestellt, sichelförmig ausgebildet. Der schraffierte Bereich illustriert den sichelförmigen Schaufelquerschnitt Q₅₀ der Schaufel 50 in radialer Richtung des Laufrads 20. Der Schaufelquerschnitt Q₅₀ veranschaulicht die Form der sich in Längsrichtung der Welle 22 erstreckenden Schaufeln 50. Wie man erkennen kann, besitzt die Schaufel 50 eine konkave Schaufelinnenseite 52 und eine konvexe Schaufelaußenseite 54 (siehe Fig. 4 und 5).

Nachdem die Schaufel 50 in den Schlitzen 32, 42 der Mehrzahl von Zwischenscheiben 30 und der Endscheiben 40 angeordnet worden ist, wird die Schaufel 50 mit den angrenzenden Flächen des jeweiligen Schlitzes 32, 42 verschweißt. Erfindungsgemäß bevorzugt sind die Schweißnähte S₅₂, S₅₄ an der konkaven Schaufelinnenseite 52 und der konvexen Schaufelaußenseite 54 unterschiedlich lang ausgebildet. Vorzugsweise verläuft die Schweißnaht S₅₂ an der konkaven Schaufelinnenseite 52 nicht bis zum geschlossenen Ende 34 des Schlitzes 32. Die Schweißnaht S₅₂ endet in einem Bereich von 5 mm bis 20 mm entfernt vom Schlitzende 34. Gemäß einer bevorzugten Ausführungsform vorliegender Erfindung endet die Schweißnaht S₅₂ 10 mm entfernt von dem geschlossenen Schlitzende 34 an der Grenzfläche zwischen der konkaven Schaufelinnenseite 52 und der dazu benachbarten Schlitzwand.

Da die Schweißnaht S₅₂ an der konkaven Schaufelinnenseite 52 die durch das Triebwasser aufgebrachte Kraft auf die Welle 22 überträgt, entstehen an der Schweißnaht S₅₂ hohe mechanische Spannungen. Um eine mechanische Spannungskonzentration an dem geschlossenen Ende 34 des Schlitzes 32 zu vermeiden oder zumindest zu reduzieren, endet die Schweißnaht S₅₂ bereits in einem gewissen Abstand zum geschlossenen Schlitzende 34. Auf diese Weise wird die Lebensdauer des Laufrads 20 erhöht.

Eine weitere Schweißverbindung zwischen Schlitz 32 und Schaufel 50 ist an der konvexen Schaufelaußenseite 54 vorgesehen. Erfindungsgemäß bevorzugt erstreckt sich eine entsprechende Schweißnaht S₅₄ an der konvexen Schaufelaußenseite 54 nur über einen Teilbereich von 10 % bis 60 % einer Gesamtlänge der konvexen Schaufelaußenseite 54. Die Gesamtlänge der konvexen Schaufelaußenseite 54 ist im Schaufelquerschnitt Q₅₀ durch die Länge der konvexen Schaufelaußenseite 54 bestimmt. Wie in Fig. 6 veranschaulicht ist, erstreckt sich die Schweißnaht S₅₄ bevorzugt beginnend am offenen Ende des Schlitzes 32 in Richtung des geschlossenen Endes 34 des Schlitzes 32. Die Schweißnaht S₅₄ hat eine bevorzugte Länge von 20 mm bis 50 mm, vorzugsweise von 30 mm ≤ S₅₄ ≤ 40 mm.

Wie mithilfe der bevorzugten Schaufelquerschnitte Q₅₀ der Fig. 4 und 5 gezeigt ist, sind die Schaufeln 50 quer zur Längsrichtung sichelförmig ausgebildet. Der Schaufelquerschnitt Q₅₀ verdeutlicht eine Dicke ds der Schaufel 50. Die Dicke dₛ beschreibt den maximalen Abstand zwischen der konkaven Schaufelinnenseite 52 und der konvexen Schaufelaußenseite 54 benachbart zum oder am Scheitelpunkt Sp des Schaufelquerschnitts Q₅₂. Vorzugsweise weist die Schaufel 50 eine Schaufeldicke dₛ aus dem Bereich von 6 mm ≤ dₛ ≤ 18 mm, vorzugsweise 9 mm ≤ dₛ ≤ 12 mm und 12 mm ≤ dₛ ≤ 16 mm, auf.

Gemäß unterschiedlicher bevorzugter Ausführungsfonnen vorliegender Erfindung besitzt die Schaufel 50 eine Schaufeldicke dₛ von 10 mm oder von 15 mm

Weiterhin bevorzugt ist der sichelförmige Schaufelquerschnitt Q₅₀ durch mindestens einen Innenradius R_{I} und mindestens einen Außenradius R_{A} definiert. Gemäß der bevorzugten Ausführungsform in den Fig. 4 und 5 ist die konkave Schaufelinnenseite 52 durch nur einen konstanten Innenradius R_{I} definiert. Die konkave Schaufelaußenseite 54 weist zumindest einen ersten Radius R_{A1} und einen zweiten Außenradius R_{A2} auf, wie Fig. 5 zeigt. Vorzugsweise ist der Schaufelquerschnitt annähernd hälftig mit unterschiedlichen Außenradien R_{A1}, R_{A2} geformt. Weiterhin bevorzugt erfüllen die beiden Außenradien R_{A1}, R_{A2} ein Verhältnis von 5:3.

Gemäß einer weiteren bevorzugten Ausführungsfonn vorliegender Erfindung weist der Schaufelquerschnitt Q₅₀ eine maximale Sekantenbreite Bₛ im Bereich von 60 mm ≤ Bₛ ≤ 140 mm auf. Die Sekantenbreite bezeichnet den Abstand zwischen zwei maximal voneinander entfernten Punkten, die auf dem Rand des sichelförmigen Schaufelquerschnitts Q₅₀ angeordnet sind. Diese Sekantenbreite Bₛ ist in den Figuren 4 und 5 dargestellt.

Die obigen Geometrieparameter der Schaufel 50 einzeln oder in ausgewählter Kombination mit der Welle 22 und den Zwischenscheiben 30 haben zu einem biege- und torsionssteiferen Laufrad 20 im Vergleich zum Stand der Technik geführt. Gerade die Schaufelgeometrie gewährleistet, dass Laufräder 20 mit einem Außendurchmesser D und einer Länge L im Verhältnis von 0,08 ≤ D/L ≤ 0,25 realisierbar sind. Weiterhin bevorzugt gilt 0,09 ≤ D/L ≤ 0,2, vorzugsweise 0,095 ≤ D/L ≤ 0,15.

Gemäß einer bevorzugten Ausführungsform vorliegender Erfindung hat das Laufrad 20 eine Länge von ca. 6000 mm ± 300 mm bei einem Durchmesser von 600 mm und 33 Schaufeln. Die Schaufeln 50 haben eine bevorzugte Dicke von 15 mm.

Gemäß einer weiteren bevorzugten Ausführungsform des Laufrads 20 hat das Laufrad 20 einen Durchmesser von 600 mm und eine Länge von 3000 mm ± 300 mm mit 30 Schaufeln. Die Schaufeldicke dₛ umfasst in dieser bevorzugten Ausführungsform 10 mm

Vorzugsweise werden die oben beschriebenen walzenförmigen Laufräder 20 in Durchströmturbinen in Kombination mit Vorrichtungen zur Papier- und Kartonherstellung eingesetzt.

Vorliegende Erfindung umfasst zudem ein Verfahren zur Herstellung eines walzenförmigen Laufrads 20 für Durchströmturbinen 1. Im Rahmen dieses Herstellungsverfahrens wird zunächst die Welle 22 mit zwei darauf endseitig fest angeordneten Endscheiben 40 und einer Mehrzahl fest auf der Welle 22 angeordneten Zwischenscheiben 30 bereitgestellt. Nachfolgend werden mehrere parallel zur Welle 22 verlaufende Schaufeln 50 jeweils in einem Schlitz 32 mehrerer Zwischenscheiben 30 angeordnet. Um die Schaufeln 50 innerhalb der Schlitze 32 der Endscheiben zu befestigen, werden die Schaufeln 50 mit den Rändern der Schlitze 32 verschweißt. Auf diese Weise entsteht ein walzenförmiges Laufrad 20, das einen Außendurchmesser D und eine Länge L im Verhältnis 0,08 ≤ D/L ≤ 0,2 besitzt.

Wie bereits oben erläutert worden ist, wird die konkave Schaufelinnenseite 52 sowie die konvexe Schaufelaußenseite 54 mit den Rändern des Schlitzes 32 verschweißt. Gerade die Wahl der Länge der jeweiligen Schweißnaht sorgt für eine stabile und belastbare Verbindung zwischen den Schaufeln 50 und den Zwischenscheiben 30 sowie den Endscheiben 40.

Die oben genannten profilierten Schaufeln 50 werden vorzugsweise mithilfe eines bekannten Warmwalzverfahrens bereitgestellt. Diese Schaufeln 50 weisen den bereits oben beschriebenen sichelförmigen Schaufelquerschnitt Q₅₀ auf.

### Bezugszeichenliste

- 1: Durchströmturbine
- 10: Leitapparat
- 20: Laufrad
- 22: Welle
- 24: Pendelrollenlager
- 26: Lagergehäuse
- 30: Zwischenscheibe
- 32: Schlitz
- 34: Schlitzende
- 40: Endscheibe
- 50: Schaufel
- 52: konkave Schaufelinnenseite
- 54: konvexe Schaufelaußenseite
- L: Länge des Laufrads
- D: Durchmesser des Laufrads
- Q₅₀: Schaufelquerschnitt
- S₅₂: Schweißnaht an der konkaven Schaufelinnenseite
- S₅₄: Schweißnaht an der konvexen Schaufelaußenseite
- d_{S}: Schaufeldicke
- S_{P}: Scheitelpunkt des Schaufelquerschnitts
- R_{I}: Innenradius im Schaufelquerschnitt
- R_{A1}, R_{A2}: Außenradius im Schaufelquerschnitt
- B_{S}: Sekantenbreite

## Patentansprüche

1. Walzenförmiges Laufrad (20) einer Durchströmturbine (1), welches radial von außen nach innen und dann radial von innen nach außen durchströmbar ist und die folgenden Merkmale aufweist:
a. eine Welle (22) mit mindestens zwei endseitig auf der Welle (22) angeordneten Endscheiben (40) und einer Mehrzahl zwischen den Endscheiben (40) auf der Welle (22) fest angeordneten Zwischenscheiben (30), wobei die Endscheiben (40) und die Zwischenscheiben (30) Radialebenen in Bezug auf die Welle (22) definieren,
b. die End- und Zwischenscheiben (30) weisen jeweils eine Mehrzahl von radial außen angeordneten Schlitzen (32) auf, in denen eine profilierte Schaufel (50) in jeweils einem Schlitz (32) zweier End- und mehrerer Zwischenscheiben (30) befestigt ist, so dass die Welle (22) in einem radialen Abstand von einem Kranz profilierter Schaufeln (50) umgeben ist, **dadurch gekennzeichnet, dass**
c. die profilierte Schaufel (50) parallel zur Welle (22) verläuft,
d. das walzenförmige Laufrad (20) einen Außendurchmesser D und eine Länge L aufweist, für die 0,08≤D/L≤0,25 gilt, sowie dass
el.die profilierte Schaufel (50) einen sichelförmigen Schaufelquerschnitt (Q₅₀) in radialer Richtung des Laufrads (20) aufweist, der durch eine Schaufelinnenseite (52) und eine Schaufelaußenseite (54) definiert ist, wobei der Schaufelquerschnitt (Q₅₀) eine maximale Dicke (dₛ) der profilierten Schaufel (50) im Bereich von 6 mm ≤ dₛ ≤ 18 mm, vorzugsweise 9 mm ≤ dₛ ≤ 14 mm, aufweist, und/oder dass
e2.die profilierte Schaufel (50) in den Schlitzen (32) zweier End- und mehreren Zwischenscheiben (30) über eine Schweißverbindung zwischen Schaufel (50) und End- und Zwischenscheibe (30) befestigt ist, in der eine Schweißnaht (S₅₂) an einer konkaven Schaufelinnenseite (52) in einem Bereich von 5 mm bis 20 mm vor einem geschlossenen Ende (34) des Schlitzes (32) endet und/oder in der sich eine Schweißnaht (S₅₄) an einer konvexen Schaufelaußenseite (54) über ein Teilstück aus einem Bereich von 10 %-60 % einer Gesamtlänge der konvexen Schaufelaußenseite (54) erstreckt.

2. Walzenförmiges Laufrad (20) gemäß Anspruch 1, in dem der Außendurchmesser D und die Länge L zueinander im Verhältnis 0,09≤D/L≤0,2, insbesondere 0,095≤D/L≤0,15, stehen.

3. Walzenförmiges Laufrad (20) gemäß einem der vorhergehenden Ansprüche, sofern auf die Alternative mit dem Merkmal e1 bezogen, in dem die End-und Zwischenscheiben (30) mit den profilierten Schaufeln (50) durch Schweißen verbunden sind.

4. Walzenförmiges Laufrad (20) gemäß Anspruch 1 mit Merkmal e1, in dem der Schaufelquerschnitt (Q₅₀) durch mindestens einen Innenradius Rᵢ und mindestens einen Außenradius Rₐ definiert ist und eine maximale Sekantenbreite Bₛ im Bereich von 60 mm≤Bₛ≤140 mm aufweist.

5. Durchströmturbine (1) mit einem walzenförmigen Laufrad (20) gemäß einem der vorhergehenden Ansprüche.

6. Papierherstellungsvorrichtung in Kombination mit einem System zur Energierückgewinnung, die eine Durchströmturbine (1) gemäß Anspruch 5 aufweist.

7. Verfahren zur Herstellung eines walzenförmigen Laufrads (20) einer Durchströmturbine (1), wobei das walzenförmige Laufrad (20) ein Laufrad (20) gemäß einem der Ansprüche 1 bis 4 ist und das Verfahren die folgenden Schritte aufweist:
a. Bereitstellen (S1) einer Welle (22) mit zwei darauf endseitig fest angeordneten Endscheiben (40) und einer Mehrzahl fest auf der Welle (22) angeordneter Zwischenscheiben (30) zwischen den Endscheiben (40),
b. Anordnen (S3) und Befestigen (S4) mehrerer parallel zur Welle (22) verlaufenden profilierten Schaufeln (50) in jeweils einem Schlitz (32) zweier End- und mehrerer Zwischenscheiben (30), sodass das Laufrad (20) einen Außendurchmesser D und eine Länge L gemäß 0,08 ≤ D/L ≤ 0,2 besitzt.

8. Verfahren gemäß Anspruch 7, in dem die Schaufel (50) mittels Schweißen in den Schlitzen (32) befestigt wird, wobei eine Schweißnaht (S₅₂) an einer konkaven Schaufelinnenseite (52) in einem Bereich von 5 mm bis 20 mm vor einem geschlossenen Ende (34) des Schlitzes (32) endet.

9. Verfahren gemäß Anspruch 7 oder 8, in dem die Schaufel (50) mittels Schweißen in den Schlitzen (32) befestigt wird, wobei sich eine Schweißnaht (S₅₄) an einer konvexen Schaufelaußenseite (54) nur über ein Teilstück aus einem Bereich von 10 % bis 60 % einer Gesamtlänge der konvexen Schaufelaußenseite (54) bezogen auf einen Schaufelquerschnitt (Q₅₀) erstreckt.

10. Verfahren gemäß einem der Ansprüche 7 bis 9, mit dem weiteren Schritt:
Bereitstellen (S2), vorzugsweise Warmwalzen, der profilierten Schaufel (50) mit einem sichelförmigen Schaufelquerschnitt (Q₅₀), der durch eine Schaufelinnenseite (52) und eine Schaufelaußenseite (54) definiert ist, wobei der Schaufelquerschnitt (Q₅₀) eine maximale Dicke (dₛ) der profilierten Schaufel (50) im Bereich von 6 mm ≤ dₛ ≤ 18 mm, vorzugsweise 9 mm ≤ ds ≤ 14 mm, aufweist.

## Claims

1. Roller-shaped runner (20) of a cross flow turbine (1) which is capable of being flown through radially from the outer side to the inner side and then radially from the inner side to the outer side, and which has the following features:
a. a shaft (22) with at least two end discs (40) being arranged on the shaft (22) at the end side and a plurality of interim discs being fixedly arranged between the end discs (40) on the shaft (22), with the end discs (40) and the interim discs (30) defining radial planes with respect to the shaft (22),
b. the end discs and interim discs (30) each comprise a plurality of radially outwardly arranged slots (32) in which a profiled blade (50) is fastened in a slot (32) each of two end discs and a plurality of interim discs (30) so that the shaft (22) is surrounded by a ring of profiled blades (50) at a radial distance, **characterized in that**
c. the profiled blade (50) runs parallel with respect to the shaft (22),
d. the roller-shaped runner (20) has an outer diameter D and a length L for which 0.08≤D/L≤0.25 applies as well as **in that**
e1. the profiled blade (50) has a sickle-shaped blade cross section (Q₅₀) in radial direction of the runner (20) which is defined by a blade inner side (52) and a blade outer side (54), wherein the blade cross section (Q₅₀) has a maximum thickness (dₛ) of the profiled blade (50) in the range from 6 mm ≤ dₛ ≤ 18 mm, preferably 9 mm ≤ dₛ ≤ 14 mm, and/or **in that**
e2. the profiled blade (50) is fastened in the slots (32) of two end discs and a plurality of interim discs (30) by means of a welding connection between blade (50) and end disc and interim disc (30), in which a welding seam (S₅₂) at a concave blade inner side (52) in a range from 5 mm to 20 mm ends before a closed end (34) of the slot (32) and/or in which at a convex blade outer side (54), a welding seam (S₅₄) extends over a part of a range from 10% - 60% of a total length of the convex blade outer side (54).

2. Roller-shaped runner (20) according to claim 1, in which the outer diameter D and the length L are at a relation of 0.09≤D/L≤0.2, in particular 0.095≤D/L≤0.15 with respect to one another.

3. Roller-shaped runner (20) according to one of the preceding claims, provided that it refers to the alternative with the feature e1, in which the end and the interim discs (30) are connected by welding with the profiled blades (50).

4. Roller-shaped runner (20) according to claim 1 with feature e1 in which the blade cross section (Q₅₀) is defined by at least an inner radius Rᵢ and at least an outer radius Rₐ and has a maximum secant width Bₛ in the range from 60 mm≤Bₛ≤140 mm.

5. Cross flow turbine (1) with a roller-shaped runner (20) according to one of the preceding claims.

6. Paper production device in combination with a system for energy recovery, having a cross flow turbine (1) according to claim 5.

7. Method for producing a roller-shaped runner (20) of a cross flow turbine (1), wherein the roller-shaped runner (20) is a runner (20) according to one of the claims 1 to 4 and the method includes the following steps:
a. providing (S1) a shaft (22) with two end discs (40) that are fixedly arranged on it at the end side and a plurality of interim discs (30) fixedly arranged on the shaft (22) between the end discs (40),
b. arranging (S3) and fastening (S4) a plurality of profiled blades (50) running parallel with respect to the shaft (22) in one slot (32) each of two end discs and a plurality of interim discs (30), so that the runner (20) has an outer diameter D and a length L according to 0.08≤D/L≤0.2.

8. Method according to claim 7, in which the blade (50) is fastened in the slots (32) by means of welding, wherein a welding seam (S₅₂) at a concave blade inner side (52) in a range from 5 mm to 20 mm ends before a closed end (34) of the slot (32).

9. Method according to claim 7 or 8, in which the blade (50) is fastened by means of welding in the slots (32) wherein a welding seam (S₅₄) at a convex blade outer side (54) extends over only a part of a range from 10 % to 60 % of a total length of the convex blade outer side (54) with respect to a blade cross section (Q₅₀).

10. Method according to one of the claims 7 to 9, with the further step:
providing (S2), preferably hot rolling, of the profiled blade (50) with a sickle-shaped blade cross section (Q₅₀) that is defined by a blade inner side (52) and a blade outer side (54), wherein the blade cross section (Q₅₀) has a maximum thickness (dₛ) of the profiled blade (50) in the range from 6 mm ≤ dₛ ≤ 18 mm, preferably 9 mm ≤ dₛ ≤ 14 mm.

## Revendications

1. Roue à augets cylindrique (20) d'une turbine à impulsions radiales (1), laquelle peut être traversée radialement de l'extérieur vers l'intérieur et puis radialement de l'intérieur vers l'extérieur et présente les caractéristiques suivantes :
a. un arbre (22) avec au moins deux disques terminaux (40) disposés côté extrémité sur l'arbre (22) et une pluralité de disques intermédiaires (30) disposés fixement sur l'arbre (22) entre les disques terminaux (40), les disques terminaux (40) et les disques intermédiaires (30) définissant des plans radiaux par rapport à l'arbre (22),
b. les disques terminaux et intermédiaires (30) présentent respectivement une pluralité de fentes (32) disposées radialement à l'extérieur, où une pale profilée (50) est fixée respectivement dans une fente (32) de deux disques terminaux et de plusieurs disques intermédiaires (30), de sorte que l'arbre (22) est entouré par une couronne de pales profilées (50) à une distance radiale, **caractérisée en ce que**
c. la pale profilée (50) s'étend parallèlement à l'arbre (22),
d. la roue à augets cylindrique (20) présente un diamètre extérieur D et une longueur L, pour lesquels 0,08 ≤ D/L ≤ 0,25 s'applique, et **en ce que**
e1. la pale profilée (50) présente une section transversale de pale (Q₅₀) en forme de croissant dans la direction radiale de la roue à augets (20), laquelle est définie par un côté intérieur de pale (52) et un côté extérieur de pale (54), la section transversale de pale (Q₅₀) présentant une épaisseur maximale (dₛ) de la pale profilée (50) dans la plage de 6 mm ≤ dₛ ≤ 18 mm, de préférence de 9 mm ≤ dₛ ≤ 14 mm, et/ou **en ce que**
e2. la pale profilée (50) est fixée dans les fentes (32) de deux disques terminaux et de plusieurs disques intermédiaires (30) par le biais d'une liaison par soudage entre la pale (50) et le disque terminal et intermédiaire (30), dans laquelle une soudure (S₅₂) sur un côté intérieur de pale concave (52) se termine à une distance entre 5 mm et 20 mm d'une extrémité fermée (34) de la fente (32), et/ou dans laquelle une soudure (S₅₄) sur un côté extérieur de pale convexe (54) s'étend sur un tronçon mesurant entre 10% et 60% d'une longueur totale d'un côté extérieur de pale convexe (54).

2. Roue à augets cylindrique (20) selon la revendication 1, dans laquelle le diamètre extérieur D et la longueur L présentent entre eux un rapport de 0,09 ≤ D/L ≤ 0,2, en particulier de 0,095 ≤ D/L ≤ 0,15.

3. Roue à augets cylindrique (20) selon l'une des revendications précédentes, dans la mesure où celle-ci se rapporte à l'alternative avec la caractéristique e1, dans laquelle les disques terminaux et intermédiaires (30) sont reliés par soudage aux pales profilées (50).

4. Roue à augets cylindrique (20) selon la revendication 1 avec la caractéristique e1, dans laquelle la section transversale de pale (Q₅₀) est définie par au moins un rayon intérieur Rᵢ et au moins un rayon extérieur Rₐ et présente une largeur de sécante maximale Bₛ dans la plage de 60 mm ≤ Bₛ ≤ 140 mm.

5. Turbine à impulsions radiales (1) avec une roue à augets cylindrique (20) selon l'une des revendications précédentes.

6. Dispositif de fabrication de papier en combinaison avec un système de récupération d'énergie, lequel présente une turbine à impulsions radiales (1) selon la revendication 5.

7. Procédé de fabrication d'une roue à augets cylindrique (20) d'une turbine à impulsions radiales (1), dans lequel la roue à augets cylindrique (20) présente une roue à augets (20) selon l'une des revendications 1 à 4 et le procédé présente les étapes suivantes :
a. mise à disposition (S1) d'un arbre (22) avec deux disques terminaux (40) disposés fixement côté extrémité sur celui-ci et avec une pluralité de disques intermédiaires (30) disposés fixement sur l'arbre (22) entre les disques terminaux (40),
b. disposition (S3) et fixation (S4) de plusieurs pales profilées (50) s'étendant parallèlement à l'arbre (22) respectivement dans une fente (32) de deux disques terminaux et de plusieurs disques intermédiaires (30), de sorte que la roue à augets (20) présente un diamètre extérieur D et une longueur L respectant 0,08 ≤ D/L ≤ 0,2.

8. Procédé selon la revendication 7, dans lequel la pale (50) est fixée par soudage dans les fentes (32), une soudure (S₅₂) sur un côté intérieur de pale concave (52) se terminant à une distance entre 5 mm et 20 mm d'une extrémité fermée (34) de la fente (32).

9. Procédé selon la revendication 7 ou 8, dans lequel la pale (50) est fixée par soudage dans les fentes (32), dans lequel une soudure (S₅₄) sur un côté extérieur de pale convexe (54) ne s'étend que sur un tronçon mesurant entre 10% et 60% d'une longueur totale d'un côté extérieur de pale convexe (54) par rapport à une section transversale de pale (Q₅₀).

10. Procédé selon l'une des revendications 7 à 9, comprenant l'étape supplémentaire suivante :
- mise à disposition (S2), de préférence par laminage à chaud, de la pale profilée (50) avec une section transversale de pale (Q₅₀) en forme de croissant, laquelle est définie par un côté intérieur de pale (52) et un côté extérieur de pale (54), la section transversale de pale (Q₅₀) présentant une épaisseur maximale (dₛ) de la pale profilée (50) dans la plage de 6 mm ≤ dₛ ≤ 18 mm, de préférence de 9 mm ≤ dₛ ≤ 14 mm.
